# EUROPEAN PATENT APPLICATION

(11) **EP 3 996 390 A1**
(43) Date of publication of application: **11.05.2022**
(21) Application number: 21175023.7
(22) Date of filing: 20.05.2021
(51) Int. Cl.: H04R 25/00, G10L 25/84, G10L 17/00

(54) **METHOD FOR SELECTING A HEARING PROGRAM OF A HEARING DEVICE BASED ON OWN VOICE DETECTION**

(71) Applicant: Sonova AG, 8712 Stäfa (CH)
(72) Inventor: GIURDA, Ruksana, 8048 Zürich (CH)
(74) Representative: Qip Patentanwälte Dr. Kuehn & Partner mbB

(57) **Abstract**

A method for providing a convenient listening experience to a user wearing a hearing device (12) is provided. The method comprises: receiving an audio signal from a sound input component (20) of the hearing device (12); extracting feature values of one or more features from the received signal; classifying the received signal as representing noise, own voice of the user, or voice of one or more other people by a statistical evaluation of the feature values with at least one Gaussian mixture model; determining a sound program for modifying the received signal depending on the classification of the received signal; and modifying an output of the hearing device (12) in accordance with the determined sound program.

## Description

### FIELD OF THE INVENTION

The invention relates to a method and a computer program for providing a convenient listening experience to a user wearing a hearing device, to a computer-readable medium storing the computer program, and to the hearing device.

### BACKGROUND OF THE INVENTION

Hearing devices, e.g. hearing aids, are generally small and complex devices. Hearing devices can include a processor, microphone, an integrated loudspeaker as a sound output device, memory, housing, and other electronical and mechanical components. Some examples of hearing devices are Behind-The-Ear (BTE), Receiver-In-Canal (RIC), In-The-Ear (ITE), Completely-In-Canal (CIC), cochlear implants, and Invisible-In-The-Canal (IIC) devices. A user can prefer one of these hearing devices compared to another device based on hearing loss, aesthetic preferences, lifestyle needs, and budget.

In hearing devices, different settings are required to provide the best listening experience depending on the acoustic background. In particular, it is important to detect the presence of voice, even if it is masked by background noise. Moreover, it also important to distinguish between the own voice of a user of the hearing device and the voice of people around the user.

In general, the own voice could be the voice of the user currently wearing the hearing device while speaking with the own voice, or the voice of the user being recorded on appropriate storing means and currently being replayed. However, for the ease of explanation, in the present application the term "own voice" always refers to the voice of the user currently wearing the hearing device while speaking with this own voice.

US 2008/0189107 A1 by Laugesen describes a method for detecting own voice by estimating a direct to reverberant energy ratio (DtoR) of an incoming sound. Whenever the sound is found above a predefined threshold, own voice is detected.

US 8,462,969 B2 by Claussen et al. describes a method for detecting own voice by using mel cepstrum coefficient and vector quantization, wherein rather speaker recognition and not own voice detection is performed.

EP 3 598 777 A2 by Jensen describes a hearing device comprising: a multitude of input units, each providing an electric input signal representing sound in the environment of the user in a time-frequency representation, wherein the sound is a mixture of speech and additive noise or other distortions; a multitude of beamformer filtering units, each being configured to receive at least two of said multitude of electric input signals, each of said multitude of beamformer filtering units being configured to provide a beamformed signal representative of the sound in a different one of a multitude of spatial segments around the user; and a multitude of speech probability estimators each configured to receive the beamformed signal for a particular spatial segment and to estimate a probability that said particular spatial segment contains speech at a given point in time and frequency, wherein at least one of the multitude of speech probability estimators is implemented as a trained neural network.

### DESCRIPTION OF THE INVENTION

It is an objective of the invention to provide a convenient listening experience to a user wearing a hearing device. Further objectives are the detection of general voice and own voice in a simple and/or cost-efficient way, and/or in the presence of background noise, robustness against different background conditions, such as different SNR values and noise levels in general, and/or a high efficiency in order to avoid excessive battery usage.

This objective is achieved by the subject-matter of the independent claims. Further exemplary embodiments are evident from the dependent claims and the following description.

A first aspect of the invention relates to a method for providing a convenient listening experience to a user wearing a hearing device. The method comprises receiving an audio signal from a sound input component of the hearing device; extracting feature values of one or more features from the received signal; classifying the received signal as representing noise, general voice, or own voice of the user by a statistical evaluation of the feature values with at least one Gaussian mixture model; determining a sound program for modifying an output of the hearing device depending on the classification of the received signal; and modifying the output of the hearing device in accordance with the determined sound program.

The method provides a convenient listening experience to the user, wherein "convenient" refers to the listening experience the user wants and not necessarily to any pleasantness. In particular, the sound processing in accordance with the sound program may have two different targets depending on what the user wants. A first target may be the clarity of the sound, e.g. understanding speech while accepting artefacts, such as shrillness. A second target may be the pleasantness of the user, e.g. enjoying the sound, not being disturbed, and/or a natural sound experience.

The sound input component may be a microphone. The audio signal may be a digital signal generated by the sound input component. The sound input component detects acoustic waves in the surroundings of the hearing device and generates the audio signal in accordance with the acoustic waves. The method may be carried out by using only one sound input component, e.g. only one microphone. This contributes to that the method may be carried out in a simple and/or cost-efficient way.

The audio signal of the sound input component may be received by a controller, e.g. a processor, of the hearing device. The feature values may be extracted from the audio signal by the controller, e.g. the processor. The feature values may be extracted from the audio signal by a sound processing software running in the processor.

The classification of the received signal may be carried out by the controller, e.g. the processor, or a classifier of the hearing device.

The feature values may be values of features of the audio signal. The feature values may be energy specific feature values. One feature of the audio signal may be an energy level of the audio signal, e.g. an energy level of the audio signal in a given frequency band, e.g. the energy level of the audio signal in the given frequency band during one time frame, e.g. an average of the energy level of the audio signal in the given frequency band during the time frame. The extracted feature values may be stored in a memory of the hearing device, e.g. temporarily.

The sound program may comprise a combination of parameter values, wherein the parameters may be one or more from the group of volume, bass, treble, and gain of the sound output, wherein the gain may be defined frequency and/or loudness dependent (representing a vector or a matrix), a beamformer configuration (strength, pattern), a noise canceller strength, a wind noise canceller strength, a global loudness compression, a frequency lowering configuration (compression ratio, cut-off frequency...). The output may be modified in accordance with the sound program by setting the parameter values of the output in accordance with the parameter values of the sound program.

In general, noise may be differentiated from voice by the energy levels of several frequency bands of the corresponding audio signal. In particular, common types of noise have a compact support in the frequency domain, i.e., they are not spread across all frequencies but rather concentrated in particular frequency bands. One exception is white noise, which may be spread over all frequencies. But this type of noise almost never occurs in real life situations and even when it occurs, it can be easily removed from the audio signal. Another exception may be speech shaped noise, which is modulated with a speech-like distribution. However, even if the noise and speech might overlap in some frequencies, the energy level of the voice can be higher than that of noise, at least in the common acoustic situations in which the hearing device will be used.

The speech signal has a well-known distribution, which is fully described e.g. by LTASS (Long-Term-Average-Speech-Spectrum). This distribution may be used in many algorithms dealing with speech, fitting method, speech cleaning etc.

Noise and voice can be modelled as Gaussian mixture models in the frequency domain, wherein each Gaussian mixture model comprises at least two Gaussian distributions. A Gaussian Mixtures Model (GMM) is a method for sound classification. In principle, one has to model the desired sound classes, e.g. noise and voice. In general, a GMM is a parametric probability density function represented as a weighted sum of Gaussian component densities. GMMs are commonly used as a parametric model of the probability distribution of continuous measurements or features in a biometric system, such as vocal-tract related spectral features in a speaker recognition system. GMM parameters are estimated from training data using an iterative Expectation-Maximization (EM) algorithm or a Maximum A Posteriori (MAP) estimation from a well-trained prior model. The classes are modelled as a mixture of Gaussian distributions, i.e. the GMM, (the higher the number of Gaussian distributions is the more faithful is the model representation, but also the more complex and resource consuming are the corresponding calculations) and are parametrized with mean and standard deviation for each considered Gaussian distribution. Then, when a new observation needs to be classified, a distance metric is applied between the new entry and the model parameters. A decision rule will then determine to which class the new entry belongs. As many other classification models, also GMM are capable to dynamically tune their internal parameter once new training/testing data are available, as explained below. This implies that the classification accuracy can be increased over time.

The method may be a computer-implemented method, which may be performed automatically by a hearing system, part of which the user's hearing device is. The hearing system may, for instance, comprise one or two hearing devices used by the same user. One or both of the hearing devices may be worn on or in an ear of the user. A hearing device may be a hearing aid, which may be adapted for compensating a hearing loss of the user. Also, a cochlear implant may be a hearing device. The hearing system may optionally further comprise at least one connected user device, such as a smartphone, smartwatch, other devices carried by the user or a personal computer of the user etc.

The solution presented herewith provides an efficient algorithm which can perform the detection of voice or general voice, i.e. Voice Activity Detection (VAD), and the detection of the own voice of the user, i.e. Own Voice Activity Detection (OVAD) based on at least one GMM. The solution may extend an existing VAD algorithm, e.g. WebRTC VAD (open source), for OVAD. The existing algorithm can perform VAD with high accuracy (90%). The WebRTC algorithm is based on several GMMs. In particular, the algorithm exploits a Gaussian mixture model to model the speech component and a Gaussian mixture model to model the noise component. In the present case, for each feature at least one GMM having at least two dimensions and/or for each class (i.e. noise, general voice, own voice) at least one GMM may be used.

According to an embodiment of the invention, classifying the received signal comprises classifying the received signal as representing noise or voice depending on the feature values. This step may be carried out by WebRTC for VAD. If the received signal is classified as representing voice, the received signal is classified as representing the own voice of the user or general voice depending on the feature values, extending the WebRTC for VAD to OVAD. So, a sound level difference between the voice produced by the hearing device user and the voice of other people may be exploited to further simplify the own voice detection task.

According to an embodiment of the invention, if the received signal is classified as representing voice, the received signal is classified as representing the own voice of the user or general voice depending on the feature values by a statistical evaluation of the feature values with at least one further Gaussian mixture model. In general, it is relatively simple to differentiate between voice and own voice, e.g. compared to differentiating between noise and general voice. Therefore, the at least one further Gaussian mixture model for classifying the received signal as representing the own voice of the user or general voice may be relatively simple, i.e. may comprise less dimensions and/or components, as the Gaussian mixture model for classifying the received signal as representing the noise or voice. So, using different Gaussian mixture models for differentiating between noise and voice than for differentiating between general voice and own voice may contribute to carrying out the method in a simple and/or cost-efficient way.

Additionally or alternatively, less Gaussian mixture models may be used for differentiating between general voice and own voice than for differentiating between noise and voice. This may contribute to carrying out the method in a simple and/or cost-efficient way.

According to an embodiment of the invention, if the received signal is classified as representing voice, the received signal is classified as representing the own voice of the user or general voice depending on those feature values, which exceed a given feature value threshold, e.g. an energy value threshold. Comparing the feature values representing voice with the feature value threshold and using only those feature values exceeding the feature value threshold may contribute to carrying out the method in a simple and/or cost-efficient way and may further reduce the resources needed for carrying out the invention.

According to an embodiment of the invention, the statistical evaluation of the feature values with at least one Gaussian mixture model comprises determining the probability for each feature value of belonging to noise, own voice and/or own voice and determining that the received signal represents noise, general voice, or own voice of the user depending on the determined probabilities.

In general, once the feature values are extracted, there are several ways to classify them as belonging to noise, general voice or own voice. In particular, metric-based and/or likelihood-based approaches may be used. So, the feature values are compared with the corresponding Gaussian mixture models, and the class/label (noise, general voice, or own voice) will be assigned based on the implemented decision rule.

One possible rule for classifying the received audio signal as representing noise, own voice and/or own voice may be to compare each of the feature values with the Gaussian mixture model for the corresponding feature, to calculate the probability of representing noise, voice or own voice for each feature value separately, and to decide depending on the calculated probabilities, whether the received audio signal represents noise, own voice and/or own voice. Alternatively or additionally, a distance metric rule which basically assigns a feature value to that class, which is found to be the closest based on the defined metric.

According to an embodiment of the invention, the features comprise energy levels of the received signal. The energy levels may range from 0 to 110 dB SPL, e.g. from 0 to 100 dB SPL.

According to an embodiment of the invention, the features comprise energy levels of different frequency bands of the received signal. For example, the received audio signal is transferred from the time domain into the frequency domain. In the frequency domain, all frequencies constituting the received audio signal are visible. Then, the frequency bands may be formed by grouping neighbouring frequencies to one band. The frequency bands, which are interesting for noise, may range e.g. from 100 Hz to 22 kHz, e.g. from 100 Hz to 15 kHz, e.g. from 100 Hz to 10 kHz. The frequency bands, which are interesting for voice, may range e.g. from 100 Hz to 10 kHz, e.g. from 100 Hz to 5 kHz.

According to an embodiment of the invention, the features comprise energy levels of a sequence of frequency bands of the received signal.

According to an embodiment of the invention, the received signal is separated into time frames and the classification of the received signal is carried out for each time frame separately. A time frame may be a short time interval. The duration of the time frames each may be 1 ms to 5 s, e.g. 1 ms to 1 s, e.g. from 6 ms to 30 ms.

According to an embodiment of the invention feature values of an audio signal, which has been identified as noise, general voice or own voice are stored associated to the corresponding feature and associated to noise, voice or, respectively, own voice over time, wherein parameters of the corresponding Gaussian mixture models are adapted to the stored feature values from time to time. This contributes to that the Gaussian mixture models are more and more adapted to the reality and get more and more accurate.

According to an embodiment of the invention, the method further comprises classifying the received signal as representing noise, general voice, or own voice of the user depending on at least one user specific information. The user specific information may be the gender or age of the user, or a voice sample of the user. In the latter case, there is the possibility of a short training with the specific user voice. The user specific information may provide information, in which features and corresponding frequency bands the own voice is very prominent. This enables to compare only the feature values of these features with the corresponding Gaussian mixture models and to omit a comparison with the other Gaussian mixture models. Thus, the total number of Gaussian mixture models needed for own voice recognition is reduced. In the result, the corresponding algorithm needs even less resources.

Further aspects of the invention relate to a computer program for providing a convenient listening experience to a user wearing the hearing device, the computer program, when being executed by a processor, being adapted to carry out the steps of the method as described above and in the following, as well as to a computer-readable medium, in which such a computer program is stored.

For example, the computer program may be executed in a processor of the hearing device, which hearing device, for example, may be carried by the person behind the ear. The computer-readable medium may be a memory of this hearing device. The computer program also may be executed by a processor of a connected user device, such as a smartphone or any other type of mobile device, which may be a part of a hearing system comprising the hearing device, and the computer-readable medium may be a memory of the connected user device. It also may be that the method may be carried out by distributed processing, e.g. some steps of the method may be performed by the hearing device and other steps of the method are performed by the connected user device.

In general, a computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. A computer-readable medium may also be a data communication network, e.g. the Internet, which allows downloading a program code. The computer-readable medium may be a non-transitory or transitory medium.

A further aspect of the invention relates to the hearing device worn by the hearing device user, wherein the hearing device is adapted for performing the method described herein above and below. A hearing system comprising the hearing device may further include, by way of example, a second hearing device worn by the same user and/or a connected user device, such as a smartphone or other mobile device or personal computer, used by the same user.

According to an embodiment of the invention, the hearing device comprises: the sound input component configured to generate the audio signal depending on the acoustic environment of the hearing device user; at least one classifier configured to extract the feature values of one or more features from the received signal and to classify the received signal as representing noise, own voice of the user, or voice of one or more other people depending on the feature values; a processor configured to determine the sound program depending on the classification of the received signal; a sound processor for processing the signal in accordance with the determined sound program; a sound output device for outputting the processed signal to an ear of the hearing device user; wherein the hearing device is configured to perform the above method.

It has to be understood that features of the method as described above and in the following may be features of the computer program, the computer-readable medium and the hearing device as described above and in the following, and vice versa.

These and other aspects of the invention will be apparent from and elucidated with reference to the embodiments described hereinafter.

### BRIEF DESCRIPTION OF THE DRAWINGS

Below, embodiments of the present invention are described in more detail with reference to the attached drawings.
Fig. 1 schematically shows a hearing device according to an embodiment of the invention.
Fig. 2 schematically shows simplified statistical distributions.
Fig. 3 shows a flow diagram of a method for providing a convenient listening experience to a user wearing a hearing device, according to an embodiment of the invention.
Fig. 4 shows a flow diagram of a method for providing a convenient listening experience to a user wearing a hearing device, according to an embodiment of the invention.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

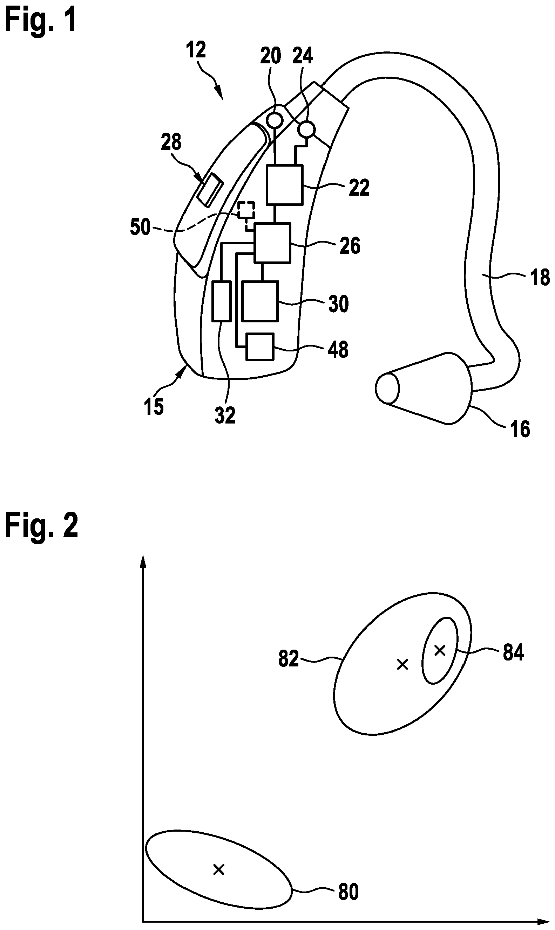

Fig. 1 schematically shows a hearing device 12 according to an embodiment of the invention. The hearing device 12 is formed as a behind-the-ear device carried by a hearing device user (not shown). It has to be noted that the hearing device 12 is a specific embodiment and that the method described herein also may be performed with other types of hearing devices, such as an in-the-ear device.

The hearing device 12 comprises a part 15 behind the ear and a part 16 to be put in the ear channel of the user. The part 15 and the part 16 are connected by a tube 18. In the part 15, at least one sound input component 20, e.g. a microphone, a sound processor 22 and a sound output component 24, such as a loudspeaker, are provided. The sound input component 20 may acquire sound of the user, e.g. own voice of the user, an/or environmental sound of the user, e.g. voices of one or more other people or noise, and may generate a sound signal. The sound processor 22 may amplify the sound signal. The sound output component 24 may generate sound from the amplified sound signal and the sound may be guided through the tube 18 and the in-the-ear part 16 into the ear channel of the user.

The hearing device 12 may comprise a processor 26, also referred to as "controller", which is adapted for adjusting parameters of the sound processor 22, also referred to as "DSP", e.g. such that an output volume of the sound signal is adjusted based on an input volume. These parameters may be determined by a computer program which is referred to as a sound program run in the processor 26. For example, with an input mean 28, e.g. a knob, of the hearing device 12, a user may select a modifier (such as bass, treble, noise suppression, dynamic volume, etc.) and levels and/or values of these modifiers may be selected, from this modifier, an adjustment command may be created and processed as described above and below. In particular, processing parameters may be determined based on the adjustment command and based on this, for example, the frequency dependent gain and the dynamic volume of the sound processor 22 may be changed. All these functions may be implemented as different sound programs stored in a memory 30 of the hearing device 12, which sound programs may be executed by the processor 22. Examples for sound programs are: "Calm situation", "Speech in noise", "Speech in loud noise", "Speech in car", "Comfort in noise", "Comfort in echo", "Music", "Acoustic phone", and "Own voice".

There may be different kinds of sound programs. For example, there may be exclusive sound programs and mixed sound programs, the latter also referred to as "mixed mode". In the case of mixed sound programs, a mixture of sound processing parameters may be applied (e.g., 20% speech and 80% noise). The parameters may be averaged or interpolated. In the case of mixed sound programs, a classifier 48 provides not a single sound class as result but a probability value for each sound class instead. The sound class with the highest probability may be handled and/or referred to as "dominant sound" class.

The dynamics of the sound program "own voice" may be different from the other ones. For example, switching among at least some of the other programs may be carried out relative slow in order to avoid harsh changes in the sound perception of the user, but the "own voice" sound program may be carried out relative quick, e.g. as quick as possible, since it is advantageous to act immediately after the own voice is detected and to release the action, i.e. to change the sound program again, when the own voice ends. For the same reason, the "own voice" sound program may not be a part of the proportion vector, because it is a special program, which preferably runs all the time.

The hearing device 12 further comprises a transceiver 32 which may be adapted for wireless data communication with a transceiver 34 of a connected user device 70 (see figure 2).

The hearing device 12 further comprises at least one classifier 48 configured to identify one or more predetermined classification values based on a signal from the sound input device 20 and/or from at least one further sensor 50 (see figure 2), e.g. an accelerometer, an optical sensor, a heart rate sensor, a GPS receiver, and/or temperature sensor. The classifier 48 may be a software or a hardware component, or a mixture of software and hardware. The classification value may be used to determine a sound program, which may be used by the hearing device 12, in particular depending on a sound input received via the sound input component 20 and/or the sensor 50. The sound input may correspond to a speaking activity, i.e. own voice, and/or acoustic environment, i.e. general voice or noise, of the user.

The hearing device 12 is configured for performing a method for providing a convenient listening experience to the user wearing the hearing device 12, as described below.

Fig. 2 schematically shows simplified statistical distributions of values of a feature of an audio signal. The axes of the diagram represent the two components used to model each Gaussian distribution, as it is known from the literature about Gaussian mixture models. The audio signal may be received via the sound input component 20. The feature and further features are extracted from the audio signal by the sound processor 22, the processor 26, or the processor 36. Each of the features may be an energy level of the audio signal in a given frequency band. Different features correspond to energy levels of the audio signal in corresponding different energy bands.

The statistical distributions may be Gaussian distributions, in particular modelled Gaussian distributions. The Gaussian distributions and the corresponding Gaussian mixture model are characterized by their parameters and parameter values. The parameters may be the means and/or standard deviations of the respective Gaussian distribution or, respectively, the Gaussian mixture model.

Each of a noise signal, a (general) voice signal and an own voice signal may be modelled as a Gaussian mixture model of corresponding feature values in the frequency domain. The Gaussian mixture model used for classifying the received signal may be modelled by the modelled Gaussian distributions of the corresponding feature values. In general, a Gaussian mixture model may be used for sound classification, wherein the desired sound classes, in this case, speech, noise and own voice, have to be modelled.

So, the simplified statistical distribution of figure 2 shows values of energy levels in a given frequency band. In the lower left of the diagram shown in figure 2, a Gaussian distribution 80 for noise, in particular of the values of the energy level in the corresponding frequency band, is shown. In the upper right of the diagram shown in figure 2 a Gaussian distribution 82 for general voice, in particular of the values of the energy level in the corresponding frequency band, is shown. The Gaussian distribution 82 for general voice comprises a Gaussian distribution 84 for own voice of the user wearing the hearing device 12. So, the Gaussian distribution 84 for the own voice of the user lies completely within the Gaussian distribution 82 for general voice. In general, the own voice has much higher energy levels in a given frequency band as general voice. Therefore, after recognizing that the audio signal represents voice, it is relatively simple to differentiate between general voice and own voice.

As stated above, figure 2 only shows simplified statistical distributions. In order to accurately identify general voice, own voice, and noise, normally more dimensional distributions are used. For example, between 3 and 15, e.g. 6, features, i.e. energy levels of 6 different frequency bands, are extracted from the audio signal. For each band one single feature is extracted, so n features = n bands are extracted, with n being a natural number. For example, the Gaussian mixture model of WebRTC has a bivariate, i.e. with two components, Gaussian distribution for speech and for noise. This means that for 6 bands there are 6 bivariate Gaussian distributions for speech and 6 bivariate Gaussian distributions for noise. So in total is actually ends up being 12 dimensions. Then, the Gaussian mixture model, with which the extracted features have to be compared, has 12 dimensions (n frequency bands times n components).

It is possible to classify a received audio signal as representing noise, general voice, or own voice of the user by a statistical evaluation of the feature values with the Gaussian mixture model, as explained below.

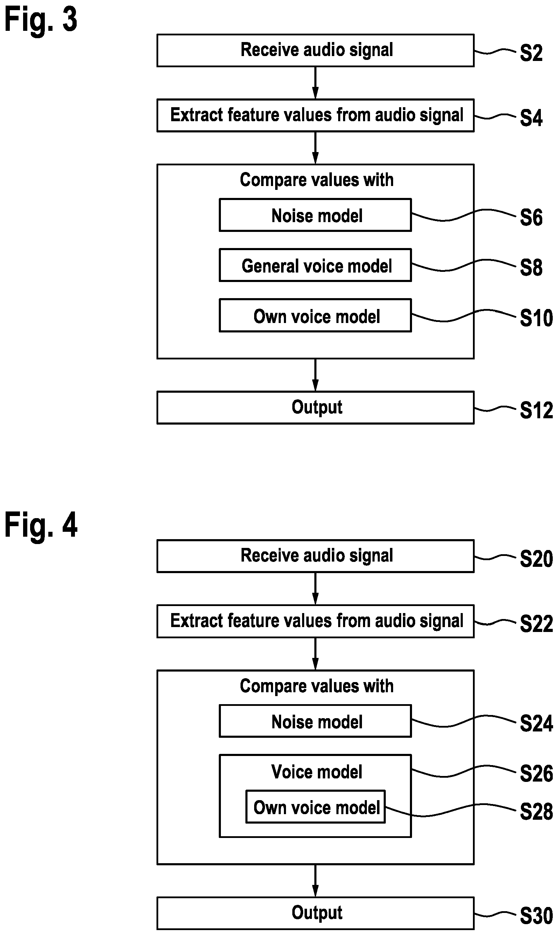

Fig. 3 shows a flow diagram of a method for providing a convenient listening experience to the user wearing the hearing device 12. The method classifies a received audio signal as representing noise, general voice, or own voice of the user by a statistical evaluation of the feature values with at least one Gaussian mixture model. The method may be a computer-implemented method performed automatically in the hearing device 12 and/or the hearing system 60. In case the hearing device 12 currently provides a sound output to the user, the sound output may be modified in accordance with a sound program.

Before using the method, some Gaussian mixture models have to be generated, e.g. by training. For example, for each of noise, voice, and own voice one corresponding Gaussian mixture model, in sum three Gaussian mixture models, may be generated. Alternatively or additionally, for each feature one corresponding Gaussian mixture model may be generated, e.g. six Gaussian mixture models may be generated for six features. Proceeding with these examples, if for each of noise, voice, and own voice one and for each feature one corresponding Gaussian mixture model is generated, there are 18 Gaussian mixture models. Each of these Gaussian mixture models is a mixture of at least two Gaussian distributions and thus has at least two dimensions.

In step S2, an audio signal from the at least one sound input component, e.g. a microphone of the hearing device 12, is received, e.g. by the sound processor 22, the processor 26 of the hearing device 12, and/or the processor 36 connected user device 70.

In step S4, feature values of several features are extracted from the audio signal. Each of the features may be an energy level in a given frequency band. For example, the audio signal may be transferred from the time domain into the frequency domain such that all frequencies constituting the audio signal become apparent. Then, neighboring frequencies of the audio signal may be grouped together such that several frequency bands are created. Now, the energy levels of the audio signal in the corresponding frequency bands may be determined. The values of these energy levels associated to the corresponding frequency bands may constitute the feature values.

Before extracting the feature values, the audio signal may be separated in several time frames. The time frames may be integer multiples of the smallest possible time frame for the hearing device 12, e.g. 5, 5.8, 6, or 8 milliseconds. One time frame may comprise 1 ms to 5 s, e.g. 1 ms to 1 s, e.g. from 6 ms to 30 ms. Then, the feature values may be extracted for each time frame separately, as explained above.

In step S6, the feature values, e.g. the feature values of one time frame, are compared with the Gaussian mixture model for the corresponding feature for noise. This comparison results for each feature value in at least one probability value or distance value, which is representative for the probability that the corresponding feature value corresponds to noise.

In step S8, the feature values, e.g. the feature values of one time frame, are compared with the Gaussian mixture model for the corresponding feature for general voice. This comparison results for each feature value in at least one probability value or distance value, which is representative for the probability that the corresponding feature value corresponds to general voice.

In step S10, the feature values, e.g. the feature values of one time frame, are compared with the Gaussian mixture model for the corresponding feature for own voice. This comparison results for each feature value in at least one probability value or distance value, which is representative for the probability that the corresponding feature value corresponds to own voice.

Then, it is determined whether the time frame of the received audio signal represents noise, general voice or own voice depending on the probability values or distance values. For example, if for only one feature the probability for being noise, general voice or own voice is higher than a given threshold, e.g. 80%, 90% or 95%, then the corresponding time frame of the received audio signal is determined as representing noise, general voice or, respectively, own voice. Alternatively or additionally, for example, if for all or at least the majority of the feature values the probability for being noise, general voice or own voice is higher than a given threshold, e.g. 40%, 45% or 50%, then the corresponding time frame of the received audio signal is determined as representing noise, general voice or, respectively, own voice.

In step S12, it is output whether the audio signal in the corresponding time frame represents general voice, own voice, or noise. This output may be used by the sound processor 22 to select an appropriate sound program for modifying the sound output to the user such that the listening experience for the user is enhanced and/or very good, in the best case optimal.

Alternatively, steps S6, S8, and S10 may be carried out in a different order and/or at least in part simultaneously.

Fig. 4 shows a flow diagram of a method for providing a convenient listening experience to the user wearing the hearing device 12. The method classifies a received audio signal as representing noise, general voice, or own voice of the user by a statistical evaluation of the feature values with at least one Gaussian mixture model. The method may be a computer-implemented method performed automatically in the hearing device 12 and/or the hearing system 60. In case the hearing device 12 currently provides a sound output to the user, the sound output may be modified in accordance with a sound program.

Before using the method, some Gaussian mixture models have to be generated, e.g. by training, as explained with respect to the method visualized in figure 3.

In step S20, an audio signal from at least one sound input component 20, e.g. the microphone of the hearing device 12, is received, e.g. by the sound processor 22, the processor 26 of the hearing device 12, and/or the processor 36 connected user device 70.

In step S22, feature values of several features are extracted from the audio signal, as explained with respect to the method visualized in figure 3.

Before extracting the feature values, the audio signal may be separated in several time frames, as explained with respect to the method visualized in figure 3. Then, the feature values are extracted for each time frame separately.

In step S24, the feature values, e.g. the feature values of one time frame, are compared with the Gaussian mixture model for the corresponding feature for noise. This comparison results for each feature value in at least one probability value or distance value, which is representative for the probability that the corresponding feature value corresponds to noise.

In step S26, the feature values, e.g. the feature values of one time frame, are compared with the Gaussian mixture model for the corresponding feature for voice. This comparison results for each feature value in at least one probability value or distance value, which is representative for the probability that the corresponding feature value corresponds to voice.

Then, it is determined whether the time frame of the received audio signal represents noise or voice depending on the probability values or distance values. If it is determined that it represents voice, the algorithm compares the extracted feature values with at least one Gaussian mixture model for own voice in step S28. This comparison results for each feature value in at least one probability value or distance value, which is representative for the probability that the corresponding feature value corresponds to general voice or own voice.

Differentiating noise from voice, noise from general voice, and noise from own voice requires relative big resources of the hearing device 12. In particular, many Gaussian mixture models and/or Gaussian mixture models with many dimensions are necessary to differentiate noise from voice, noise from general voice, and noise from own voice. However, if an audio signal or a time frame of an audio signal is already identified as representing voice, it is relatively easy and resource saving to differentiate between general voice and own voice, because there is a big difference between the energy levels of general voice and own voice, because the own voice of the user is generated much closer to the microphone than the general voice of other people. In particular, only very few Gaussian mixture models and/or Gaussian mixture models with a low number of dimensions are necessary to differentiate general voice from own voice.

Alternatively or additionally, after determining that the received audio signal represents voice, the corresponding feature values are checked against a given feature value threshold and only those feature values are compared with the Gaussian mixture model for own voice, which exceed the feature value threshold. This takes into account that in general the energy levels of the frequency bands of the own voice are much higher than that of general voice. So, less features have to be compared reducing the time and resources needed.

Therefore, the algorithm of figure 4 needs less resources than the algorithm of figure 3.

In step S30, it is output whether the audio signal in the corresponding time frame represents general voice, own voice, or noise. This output may be used by the sound processor 22 to select an appropriate sound program for modifying the sound output in the corresponding time frame to the user such that the listening experience for the user is enhanced and/or very good, in the best case optimal.

In the methods shown in figures 3 and 4, the number of Gaussian mixture models needed may be reduced further, if at least one user specific information about the user is known. The specific information may be the gender or age of the user, or a voice sample of the user. In the latter case, there is the possibility of a short training with the specific user voice. This provides information, in which features and corresponding frequency bands the own voice is very prominent. This enables to compare only the feature values of these features with the corresponding Gaussian mixture models and to omit a comparison with the other Gaussian mixture models. Thus, the total number of Gaussian mixture models for own voice is reduced. In the result, the corresponding algorithm needs even less resources.

Optionally, the method shown in figure 3 and/or the method shown in figure 4 each comprises a step of storing parameters, such as mean and/or standard deviations, of the Gaussian mixture models for noise, voice and/or own voice over time, wherein from time to time the parameters for the modelled Gaussian mixture models for noise, voice and/or own voice are adapted to an average of the stored parameters. So, the internal parameters may be dynamically tuned once new training/testing data are available. This implies that the classification accuracy can be increased over time.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practicing the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 12: hearing device
- 15: part behind the ear
- 16: part in the ear
- 18: tube
- 20: sound input component
- 22: sound processor
- 24: sound output component
- 26: processor
- 28: input mean
- 30: memory
- 32: transceiver of hearing device
- 34: transceiver of connected user device
- 36: processor
- 38: memory
- 40: graphical user interface
- 42: display
- 44: control element, slider
- 48: classifier
- 50: further sensor
- 60: hearing system
- 70: connected user device
- 80: Gaussian distribution for noise
- 82: Gaussian distribution for general voice
- 84: Gaussian distribution for own voice
- S2-S30: steps two to thirty

## Claims

1. A method for providing a convenient listening experience to a user wearing a hearing device (12), the method comprising:
receiving an audio signal from a sound input component (20) of the hearing device (12);
extracting feature values of one or more features from the received signal;
classifying the received signal as representing noise, general voice, or own voice of the user by a statistical evaluation of the feature values with at least one Gaussian mixture model;
determining a sound program for modifying an output of the hearing device (12) depending on the classification of the received signal; and
modifying the output of the hearing device (12) in accordance with the determined sound program.

2. The method of claim 1, wherein classifying the received signal comprises:
classifying the received signal as representing noise or voice depending on the feature values;
if the received signal is classified as representing voice, classifying the received signal as representing the own voice of the user or general voice depending on the feature values.

3. The method of claim 2, wherein
if the received signal is classified as representing voice, the received signal is classified as representing the own voice of the user or general voice depending on the feature values by a statistical evaluation of the feature values with at least one further Gaussian mixture model.

4. The method of one of claims 2 or 3, wherein
if the received signal is classified as representing voice, the received signal is classified as representing the own voice of the user or general voice depending on those feature values only, which exceed a given feature value threshold.

5. The method of one of the previous claims, wherein the statistical evaluation of the feature values with at least one Gaussian mixture model comprises:
determining the probability for each feature value of belonging to noise, own voice and/or own voice and
determining that the received signal represents noise, general voice, or own voice of the user depending on the determined probabilities.

6. The method of one of the previous claims, wherein
the features comprise energy levels of the received signal.

7. The method of claim 6, wherein
the features comprise energy levels of different frequency bands of the received signal.

8. The method of claim 6 or 7, wherein
the features comprise energy levels of a sequence of frequency bands of the received signal.

9. The method of one of the previous claims, wherein
the received signal is separated into time frames and
the classification of the received signal is carried out for each time frame separately.

10. The method of one of the previous claims, wherein
feature values of an audio signal, which has been identified as noise, voice or own voice, are stored associated to noise, voice or, respectively, own voice over time;
wherein parameters of at least one of the Gaussian mixture models are adapted to the stored feature values.

11. The method of one of the previous claims, further comprising:
classifying the received signal as representing noise, general voice, or own voice of the user depending on at least one user specific information.

12. A computer program for providing a convenient listening experience to a user wearing a hearing device (12), the computer program, when being executed by a processor (26, 36), being adapted to carry out the steps of the method of one of the previous claims.

13. A computer-readable medium, in which a computer program according to claim 12 is stored.

14. A hearing device (12) worn by a hearing device user, the hearing device (12) comprising:
a sound input component (20) configured to generate an audio signal depending on an acoustic environment of the hearing device user;
at least one classifier (48) configured to extract feature values of one or more features from the received signal and to classify the received signal as representing noise, own voice of the user, or voice of one or more other people depending on the feature values;
a processor (26) configured to determine a sound program depending on the classification of the received signal;
a sound processor (22) for processing the signal in accordance with the determined sound program;
a sound output device (24) for outputting the processed signal to an ear of the hearing device user;
wherein the hearing device (12) is configured to perform the method of one of claims 1 to 11.
